# EUROPEAN PATENT APPLICATION

(11) **EP 4 574 375 A1**
(43) Date of publication of application: **25.06.2025**
(21) Application number: 24214089.5
(22) Date of filing: 20.11.2024
(51) Int. Cl.: B29B 11/16, B29C 33/38

(54) **VARIABLE STIFFNESS TOOL**

(30) Priority: 20.12.2023 GB 202319599
(71) Applicant: Rolls-Royce plc, London N1 9FX (GB)
(72) Inventor: York, Alasdair S, Derby, DE24 8BJ (GB); Mclean, Martin J, Derby, DE24 8BJ (GB); Matheson, Louis Jacob, Derby, DE24 8BJ (GB); Jani, Krutarth, Derby, DE24 8BJ (GB); Ford, Penelope H L, Derby, DE24 8BJ (GB)
(74) Representative: Rolls-Royce plc

(57) **Abstract**

A moulding tool for moulding a composite article preform, the composite article preform having a thickness that varies between different portions of the composite article preform. The moulding tool comprises a first portion for moulding a corresponding first region of the composite article, a second portion for moulding a corresponding second region of the composite article, and a transition portion between the first portion and the second portion. The first portion of the moulding tool comprises a first material. The second portion of the moulding tool comprises a second material. The transition portion comprises the first material and the second material. The first material and the second material are different. The first portion and the second portion of the moulding tool have different stiffnesses.

## Description

### FIELD

The present disclosure concerns a variable stiffness tool. Specifically, it concerns a variable stiffness moulding tool for moulding composite article preforms.

### BACKGROUND

In recent years, a desire to save gas turbine engine weight for aero propulsion has led to the increased use of carbon composite fan blades. Moulding tools may be used during the manufacturing process of composite fan blades, with these moulding tools being either hard tools (stiff) or soft tools (flexible).

### SUMMARY

According to a first aspect there is provided a moulding tool for moulding a composite article preform. The composite article preform has a thickness that varies between different regions of the composite article preform. The moulding tool comprises a first portion for moulding a corresponding first region of the composite article preform, the first portion of the moulding tool comprising a first material. The moulding tool also comprises a second portion for moulding a corresponding second region of the composite article preform, the second portion of the moulding tool comprising a second material. The moulding tool also comprises a transition portion between the first portion and the second portion. The transition portion comprises the first material and the second material. The first material and the second material are different. The first portion and the second portion have different stiffnesses.

At least one of a location and/or a spatial extent of the transition portion of the moulding tool may be based upon a desired rate of change of thickness of the composite article preform.

The first material may have a greater stiffness than the second material.

The first material may comprise at least one of a metal, a metal alloy, or a composite. The metal alloy may be an iron-nickel alloy.

The second material may comprise an elastomer. The elastomer may be a silicone rubber.

The first region of the composite article preform may be thinner than the second region of the composite article preform.

The transition portion of the moulding tool may comprise a layered structure in which the first material is proximal to an outer surface of the composite article preform and the second material overlays the first material. A thickness of the first material in the layered structure of the transition portion may decreases with distance from the first portion of the moulding tool. The thickness of the first material in the layered structure of the transition portion may continuously taper to a substantially zero thickness. A taper angle of the taper may be less than 20 degrees.

The first portion and the second portion may be connected by an adhesive or at least one mechanical fixing.

The moulding tool may additionally comprise at least one guide. The at least one guide is configured to enable movement of the moulding tool in a desired direction and to prevent movement of the moulding tool in an undesired direction. Relative movement between the moulding tool and the composite article preform may therefore be controlled when the moulding tool is compressed against the composite article preform.

According to a second aspect there is provided a method of forming a composite article preform e.g. as described in the above paragraphs. The method comprises laying down a plurality of layers of composite material upon a buck; overlaying a moulding tool of the first aspect upon the plurality of composite layers; compressing the layers of composite fiber between the buck and the moulding tool; and curing the matrix material;
The composite article preform formed by the above method may be a preform of a composite article; the composite article may be a gas turbine engine composite fan blade.

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### BRIEF DESCRIPTION OF THE DRAWINGS

Embodiments will now be described by way of example only, with reference to the Figures, in which:
**FIG. 1** is a sectional side view of a gas turbine engine;
**FIG. 2** is an illustration of a composite article in the form of a fan blade;
**FIG. 3** is an end-on view (view `A') of the composite article of FIG. 2;
**FIG. 4** is a cross-section of a composite article in the form of a fan blade;
**FIG. 5** shows a cross-section through a composite article;
**FIG. 6** is a schematic illustration of part of a composite article, illustrating the forces acting on a cross-section of a composite article during moulding when a stiff moulding tool is used;
**FIG. 7** is a schematic illustration of part of a composite article, illustrating the forces acting on a cross-section of a composite article during moulding when a reduced stiffness moulding tool is used;
**FIG. 8** shows an example of a moulding tool for moulding a composite article preform;
**FIG. 9** shows an example of the moulding tool of FIG. 8 used in conjunction with a single piece moulding tool; and
**FIG. 10** illustrates a method of forming a composite article preform.

### DETAILED DESCRIPTION

Aspects and embodiments disclosed herein will now be discussed with reference to the accompanying figures. Further aspects and embodiments will be apparent to those skilled in the art.

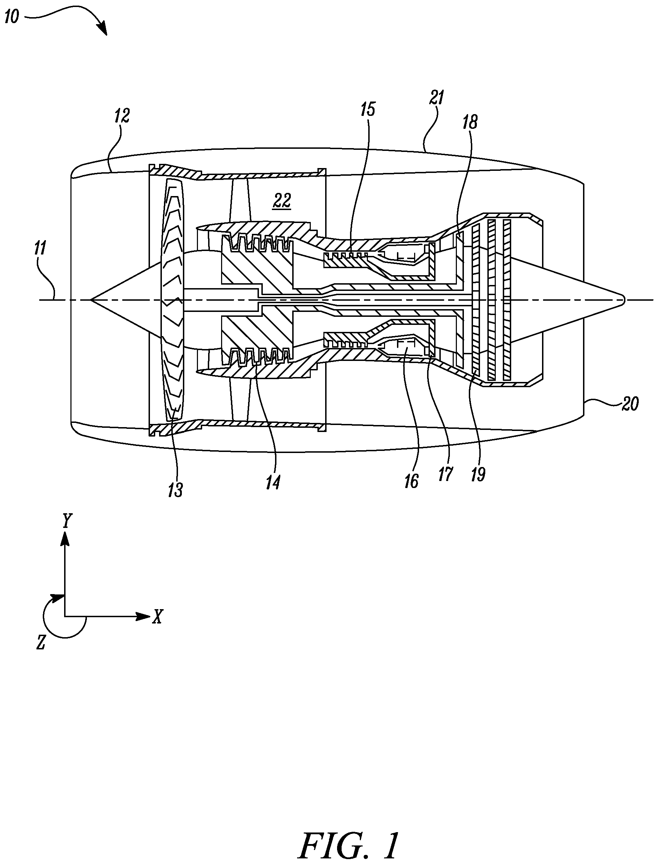

With reference to **FIG. 1****,** a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The resultant hot combustion products then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

In alternative embodiment, the engine 10 may have an alternative number of interconnecting shafts (e.g. two) and/or an alternative number of compressors and/or turbines. Further the engine may comprise a gearbox provided in the drive train from a turbine to a compressor and/or fan.

It will be readily appreciated that the fan 13 of the gas turbine engine 10 comprises a plurality of fan blades 30.

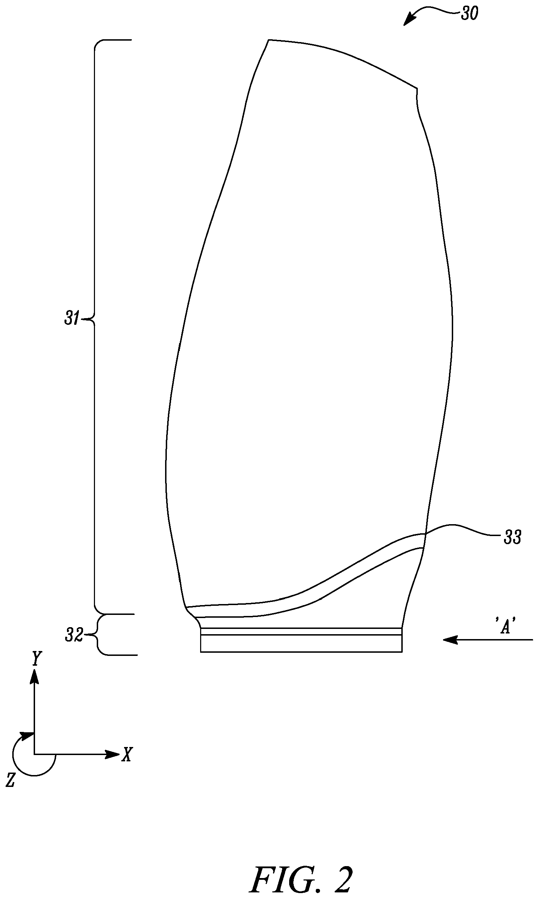

**FIG. 2** provides an illustration of a composite article in the form of a fan blade 30 for a gas turbine engine.

For ease of reference, FIG. 2 also provides a co-ordinate system in which when the fan blade is installed in the gas turbine engine 10, the `X' direction is substantially axial (i.e., parallel with, but not colinear with the principal axis of rotation 11), the 'Y' direction is substantially radial (i.e., the span of the blade increasing with +Y) and the `Z' direction is substantially normal to both 'X' and 'Y', being in a substantially through thickness direction of the blade.

The fan blade 30 may be formed from a composite material, such as carbon composite, in which a plurality of layers of carbon fiber are encapsulated within a matrix material such as an epoxy. Fan blade 30 of FIG. 2 may therefore also be referred to as a composite article 30.

The fan blade 30 must satisfy both aerodynamic and structural requirements, in that the fan blade 30 must have a high aerodynamic efficiency whilst also being mechanically robust, for example, by being able to tolerate impact events such as a bird striking the fan blade during take-off.

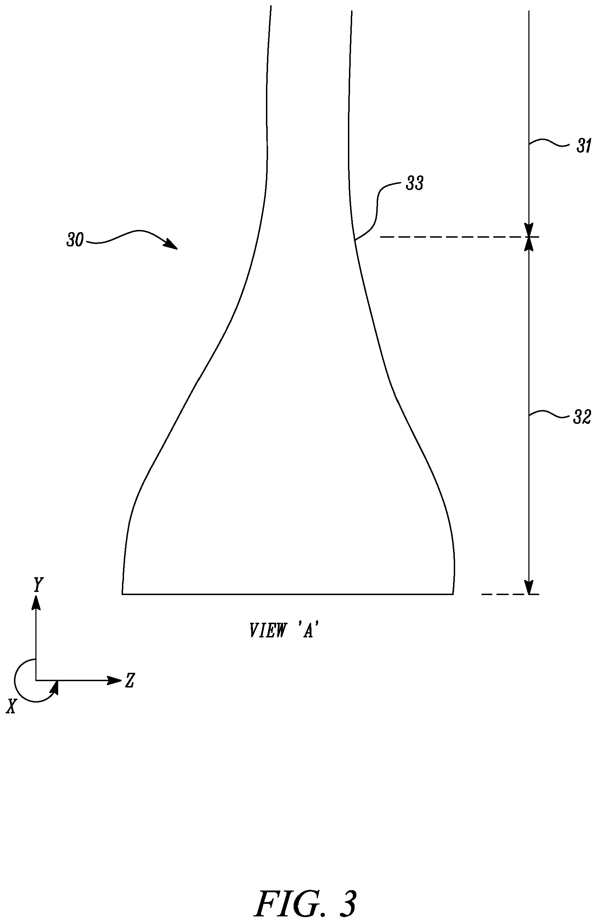

These competing requirements mean that the aerodynamic region of the fan blade is typically thin, whereas the root region of the blade (connected to a fan disc) is thicker, often significantly thicker. This means that there may be a significant increase in the thickness of the fan blade along the aerodynamic region 31 and the root region 32 of the fan blade. This is illustrated in FIG. 3, showing an end-on view 'A' of fan blade 30 of FIG. 2.

The aerodynamic region 31 and the root region 32 may be separated by an annulus line 33. The annulus line represents the profile of an outer surface of a central aerodynamic spinner that covers the root regions of the fan blades 30 comprised within fan 13.

Additionally, for a fan blade to have a high aerodynamic efficiency, and for repeatability of performance between blades made to the same nominal design, it is important to control the surface profile of the aerodynamic region 31 of the fan blade (composite article), such that it stays within a defined tolerance. In other words, it is important to minimise, where possible, the degree of undulation (oscillation) present in the outer surface of the fan blade.

It will be appreciated that although multiple manufacturing processes are performed to produce a finished composite fan blade 30, one way to improve the surface profile tolerance of a composite fan blade 30 is to control the exterior surface profile of a composite article preform 35 that comprises the layers of composite material of composite fan blade 30. When cured, these layers give the composite fan blade its strength (mechanical robustness) whilst also substantially defining the surface profile of the finished composite fan blade (for example, not accounting for any additionally outer protective coating which may be subsequently applied to the preform).

It will be appreciated that the composite article preform 35 (e.g., a fan blade preform) represents an interim state in the manufacture of the composite article (fan blade).

For example, once the composite layers of the composite article preform have cured and the shape of the composite article has been substantially defined, an outer protective layer or layers may be applied to the preform 35 to create the finished article 30. Other manufacturing processes, such as machining, may also be applied to create the composite article from the composite article preform. For example, in some embodiments, the root region 32 of the composite article preform 35 may be machined post curing to ensure an improved mechanical interface with the fan disc.

It will also be appreciated that the exterior profile of the composite article preform, post curing, is based at least in part on the uncured (pre-curing profile).

Thus, it is desirable to control the outer profile of the composite fan blade preform (composite article preform) both before and during curing of the composite layers of material from which the preform is made.

This may be accomplished by placing a moulding tool over a region of the outer profile of the uncured composite article preform, prior to vacuum debulking and curing processes. The vacuum debulking process compresses the moulding tool against the outer profile of the uncured composite article preform such that variations (undulations) in the outer profile of the composite article preform are reduced, prior to curing.

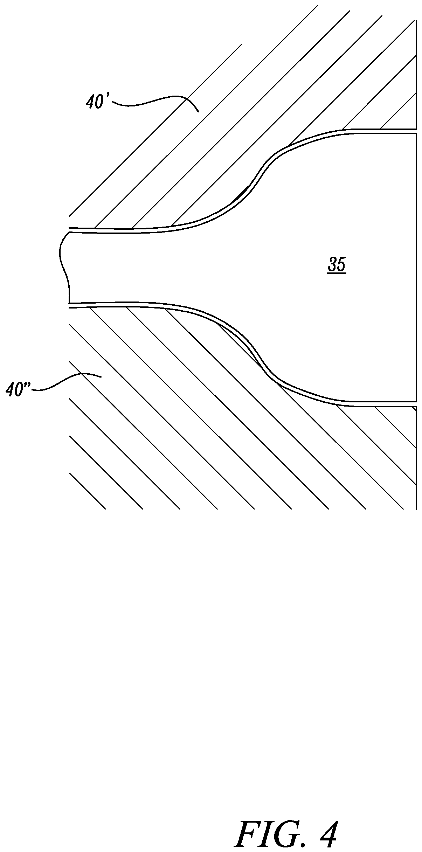

In the case of a composite article preform that, once cured, will be form part of a composite fan blade 30, it may be appreciated that more than one moulding tool 40 may be used, i.e., the plurality of uncured layers which form the composite article preform may be between a first moulding tool 40' and a second moulding tool 40" (see FIG. 4).

In this case, each of the first moulding tool 40' and second moulding tool 40" has a surface profile that substantially matches (corresponds to) the desired surface profile of one of the surfaces of the blade, i.e., one of the first moulding tool 40' and the second moulding tool 40" substantially matches the desired surface profile of the pressure surface of the fan blade 30, while the other moulding tool substantially matches the desired surface profile of the suction surface of the fan blade 30.

Both the profiles of the moulding tools (first moulding tool 40' and the second moulding tool 40") also comprise a representation of a surface of a root region of the fan blade. The first moulding tool 40' and second moulding tool 40" may therefore each mould a surface of the aerodynamic region and the root region of the composite article preform 35.

In the example illustrated in **FIG. 4****,** the first moulding tool 40' is above the composite layers of the composite article preform 35. The first moulding tool 40 may therefore also be referred to as a top moulding tool 40'. Conversely, the second moulding tool 40", as it is below the composite layers 35, may be referred to as a bottom moulding tool 40".

Once the layers have been stacked on top of each other between the first moulding tool 40' and the second moulding tool 40", to form the uncured composite article preform 35, the uncured composite article preform 35 may be placed in a vacuum bag and placed in an autoclave for curing.

The evacuation of air from the vacuum bag (a vacuum debulking process) presses the first moulding tool 40' and, optionally, the second moulding tool 40" against the layers of composite material of the uncured composite article preform 35.

This is desirable because it assists in the expulsion of air bubbles which may have become trapped between the layers during layup, whilst also assisting in the flow of uncured matrix material between the fibers of the layers. This results in a denser, more compact layered structure, which once cured in the autoclave, has superior properties (for example, mechanical strength) to what would have been achieved without the vacuum debulking process.

Vacuum debulking also has an additional advantage, in that as the first moulding tool 40' and the second moulding tool 40" is significantly stiffer than the uncured composite material, the outer profile of the composite material will adapt to the profile of the first moulding tool 40' and optionally, the second moulding tool 40".

It may be desirable for the moulding tool 40 (for example, first moulding tool 40' and the second moulding tool 40") to be made from a stiff material, as a stiff moulding tool reduces the degree of surface undulation in the resulting cured preform. If made from a stiff material, the tool may be referred to as a "hard tool" or "hard tooling".

The moulding tool 40 may comprise cured composite material, such as cured carbon composite material. In addition to being stiff, composite materials have the advantage that they produce a tool which is typically lighter-weight than a corresponding metallic tool. Furthermore, by making a moulding tool from the same or similar materials to be cured, the thermal expansion of the moulding tool may match or substantially match the composite material to be cured. This may be desirable because it may reduce distortion and/or thermal stresses of the composite article preform.

As curing takes place at an elevated temperature to the environmental temperature at which the composite layers are laid down, optionally, it may be desirable that the material forming the moulding tool 40 has a low coefficient of thermal expansion. In this way, a good control of the outer profile of the composite material may be achieved, with minimal distortion of the outer profile occurring due to the temperature change experienced during curing.

The moulding tool 40 may comprise a material that is an iron-nickel alloy, e.g. FeNi36 or INVAR^{®} iron-nickel alloy, which has a low coefficient of thermal expansion (and is commercially available from Magellan Metals).

Although using stiff tooling produces a dense composite with good control of the surface profile, it has been discovered that in some circumstances, the internal orientation of the resulting layers of composite material of the cured carbon composite preform can be non-optimal. In fact, the internal orientation of the layers of composite material in cured composite article preform 35 may be locally different to that the composite layer structure of the uncured composite article preform 35, prior to placing the uncured preform in a vacuum bag for vacuum debulking.

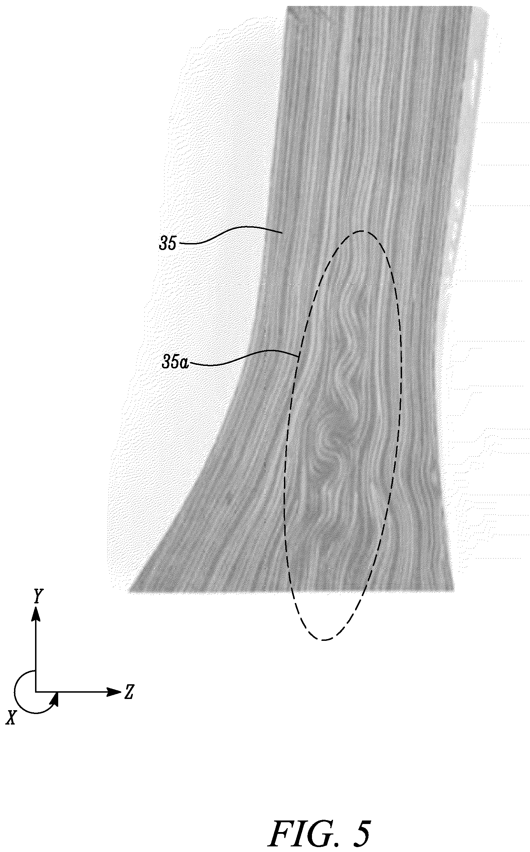

This is illustrated in **FIG. 5****,** which shows an example of a sectioned cured layer structure, representing a transition region between a first region of the composite article preform 35 that will, in a finished fan blade, form an aerodynamic region of the fan blade, and a second region of the composite article preform 35 that will, in a finished fan blade, form a root region of the fan blade. It will be appreciated that the example of FIG.5 is merely one example of internal undulations 35a that may form within the composite article preform 35. For example, undulations may form in other parts of the transition region to that shown in FIG. 5.

In FIG. 5, it can be seen that despite the outer surfaces of the composite layers having a uniform (non-undulating) profile, the interior layer structure of the composite article can have local internal undulations 35a. These internal undulations 35a may be undesirable because they reduce the ability of the composite article preform, and hence the composite article, to support a load, as the fibers in the undulating composite layers are not always substantially aligned with the direction of application of that load. The resulting cured composite article may therefore fail prematurely.

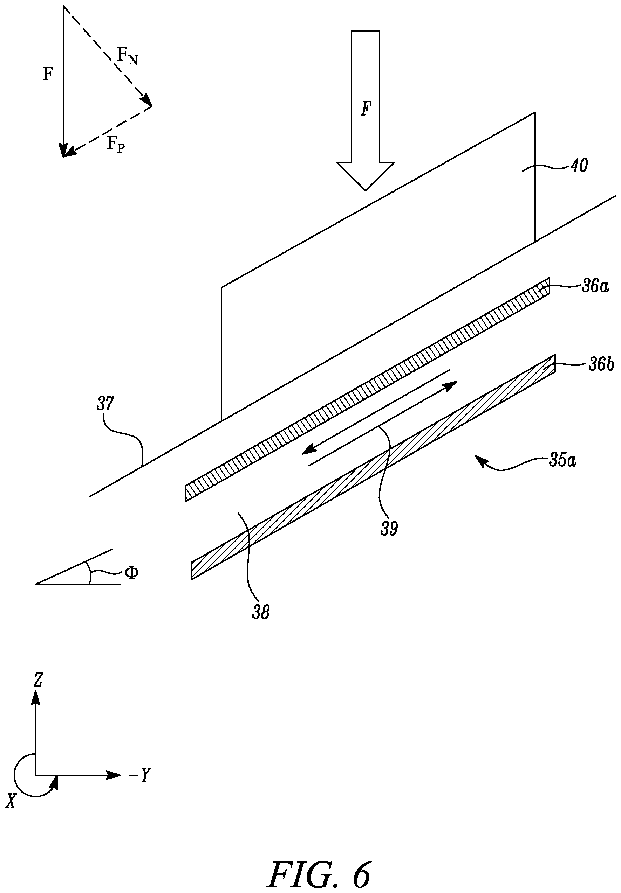

These undulations were also not present in the uncured layered structure, prior to application of the hard tooling, vacuum debulking and curing. The origin of these undulations is better understood by reference to FIG. 6.

As previously disclosed, the aerodynamic region of a composite fan blade has a through-thickness that is significantly smaller than the root region of the blade. As a consequence, a cross-section through the root region of the blade may contain a substantially greater number of layers of composite material than the aerodynamic region.

**FIG. 6** shows that as a consequence of this increase in thickness between the aerodynamic region and the root region of the fan blade, the composite layers in the transition region between the aerodynamic region and the root region, in which undesirable sub-surface (internal) undulations 35a may form in the composite layer structure, may be inclined at an angle Φ to the direction in which moulding tool 40 (as first moulding tool 40' and/or second moulding tool 40") is applied. It will be appreciated that if the moulding tool 40 is to produce a conforming aerodynamic surface in the aerodynamic region of the preform, compression of the layers within the aerodynamic region of the preform is required.

However, as the root region of the preform 35 is thicker than the aerodynamic region, if the moulding tool 40 is made from a stiff material, as a substantially uniform amount of compression (displacement) occurs in the aerodynamic region and root region of the preform, substantially more compression occurs between layers in the aerodynamic region than in the root region, as there are fewer layers in the aerodynamic region than the root region.

Thus, for a uniform degree of compression (i.e. displacement in the "-Z" direction of FIG. 6), the layer structure within the aerodynamic region of the blade may be denser (more compact) than in the root region. Indeed, full-fibre impregnation of the matrix material 38 between fibres in the root region may not have occurred in the root region, whilst voids, caused by the presence of air bubbles may also remain.

Thus, following curing, although the root region of the composite fan blade preform 35 may conform to a required exterior profile, as the layers within the root region may not be sufficiently dense, due to insufficient compaction, the root region of the composite fan blade may be weaker than design intent. As this region of the fan blade must withstand high loads, this region of the fan blade is highly stressed. A weaker composite structure in this area may therefore lead to premature failure of the fan blade 30.

A potential way to overcome this problem is to arrange the layer structure of the root region such that more through-thickness compression (e.g., displacement in "-Z" direction takes place in the root region of the fan blade 30 than in the aerodynamic region of the fan blade 30.

This may be achieved by arranging the uncured layers of composite material prior to application of tool 50 such that the outer profile of the uncured layers of the root region of the fan blade proportionately stands proud (jut out) of the outer region of the aerodynamic region of the fan blade. In this way, during compression of the uncured material during vacuum debulking, more through thickness compression (e.g., compression in the "-Z" direction) occurs in the root region than in the aerodynamic region. This results in a composite structure that conforms to a desired surface profile in the aerodynamic region, but also has a more uniformly dense layered structure throughout the preform (aerodynamic region and root region).

Once cured, although under some circumstances, this may produce a composite article preform 35 (composite fan blade preform 35) that has both an acceptable degree of compaction and an acceptable outer profile, under other circumstances this may lead to an undesirable, undulating arrangement of layers within the composite article preform, as illustrated in FIG. 5.

FIG. 6 illustrates the forces acting on uncured layers of the composite material due to the application of a force, F generated by vacuum debulking, acting on a moulding tool 40. Although FIG. 6 shows that a surface of the moulding tool 40 is in direct contact with an outer surface 37 of the uncured layers, it will be appreciated that in some circumstances a release film (not shown) may be placed between the moulding tool 40 and the outer surface 37.

From FIG. 6, it will be readily understood that application of compressive force F to the moulding tool 40 causes inter-layer compression between adjacent uncured layers of composite material. For example, inter-layer compression occurs between layers 36a and 36b of the composite article preform 35.

FIG. 6 also illustrates that these layers 36 may not be aligned with a principal axis of the component (i.e. the layers do not lie substantially in the "X-Y" plane) but may instead be inclined at an angle Φ to the "X-Y" plane. This may occur in regions of the uncured composite article preform in which there is a rate of change of through-thickness, such as in transition region between the thin aerodynamic region and thick root region of the composite article preform.

Without wishing to be bound by any particular theory, if adjacent layers of uncured composite material are locally inclined at a non-zero angle Φ to the "X-Y" plane, force F may be resolved into the sum of a first force F_{N} that is normal (i.e., perpendicular) to the plane of a composite layer and a force F_{P} that is in the plane of the composite layer. Force F_{P} is a shearing force that acts to promote shearing (slippage) 39 between adjacent layers 36a, 36b of uncured fiber. Despite the presence of shear force F_{P}, slippage 39 will not occur if an in plane resistive force is greater than the shear force.

The resistive force may be proportional to the normal contact force F_{N}, with the ratio of F_{N} to F_{P} in turn dependent upon angle Φ.

The resistive force may also be dependent upon the degree of overlap between adjacent ply layers, as this affects the area over which shearing must occur during slippage.

The resistive force may also be dependent upon the degree of in-plane curvature of the adjacent ply layers, for a given contact area.

From the above, it will be understood that the likelihood of slippage 39 between layers occurring may be dependent upon a desired rate of change of thickness of the composite article, as a higher rate of change of thickness increases the value of angle Φ, increasing the ratio of F_{P} to F_{N}.

The likelihood of slippage 39 occurring may also be dependent upon the stiffness of the moulding tool 40, as this affects the angle of applied force F, relative to the principal axis of the composite article preform "Z" plane, and as a consequence, the relative magnitudes of F_{N} and F_{P}.

For example, when a stiff moulding tool ("hard tool") is used, the hard tool does not bend or deform to any significant degree when it is pressed against the uncured layers of the composite article preform. The direction of the applied compressive force exerted by the hard tool on the uncured layers of composite material of the composite article preform 35 during vacuum debulking is therefore parallel to or substantially parallel to the direction of compression.

As the region of the composite article preform 35 that will form the aerodynamic region 31 of the fan blade 30 is substantially larger than the region of the composite article preform that will form the root region 32 of the fan blade 30, and as the aerodynamic region 31 of the fan blade lies substantially in the "X-Y" plane, this means that contact force F between tool and surface 37 in the root region is substantially in the "-Z" direction, even though outer surface 37 (and layers 36a, 36b) are inclined at angle Φ to the "X-Y" plane.

As previously disclosed, this gives rise to a shear force F_{P}, which promotes slippage 39 between layers 36, causing internal undulations 35a within the composite article preform 35.

If however, the hard tool is replaced by a soft tool - for example, by substituting a stiff tool material such as INVAR (RTM) iron-nickel alloy or cured carbon composite, with a less stiff material such as an elastomer such as a silicone rubber then, as the soft tool is pressed against the uncured material during vacuum debulking, the tooling will, to an extend deform to match the shape of the uncured material.

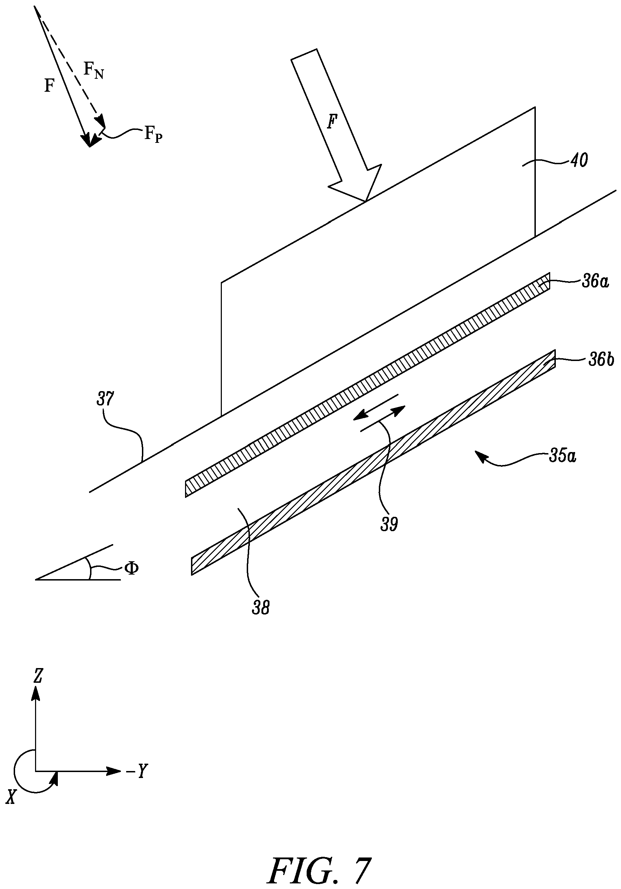

The effect of this is illustrated in **FIG. 7****.** Relative to FIG. 6, FIG. 7 shows that compressive force F is now substantially normal (perpendicular) to surface 37 because the lower stiffness of the moulding tool, due to change in tooling material, has enabled the tooling to deform as it is compressed against the outer surface 37 of the uncured composite material. This means that the ratio of the magnitude of component F_{P} to component F_{N} is reduced relative to the example of FIG. 6, for the same local preform geometry (same angle Φ).

Thus, reducing the stiffness of the moulding tool 40 reduces the propensity for slippage 39 to occur between uncured layers of composite material when there is a significant change in thickness of the composite article preform in a short distance. As a consequence, the likelihood of internal undulations being created within the composite article preform 35 is reduced, leading to a stronger root region for the resulting composite article preform 35 and resulting fan blade 30.

However, use of a soft tool ("soft tooling") may have the disadvantage that although it is more effective at reducing undulations between composite layers within the composite article preform 35, it is less effective than hard tooling in reducing surface undulations in the uncured preform, as it deforms, potentially reducing the aerodynamic efficiency of the resulting composite fan blade.

Taking these two competing interests into account, the inventors have determined that it is beneficial to produce a moulding tool 40 for moulding a composite article preform 35 that has a variable stiffness, such that the moulding tool 40 has a higher stiffness for moulding regions of the composite article preform 35 where close control of surface profile is required, and a lower stiffness for moulding regions of the composite article preform, where the localised geometry of the uncured preform is such that slippage may occur between uncured layers of composite material, creating internal undulations with the composite article preform 35.

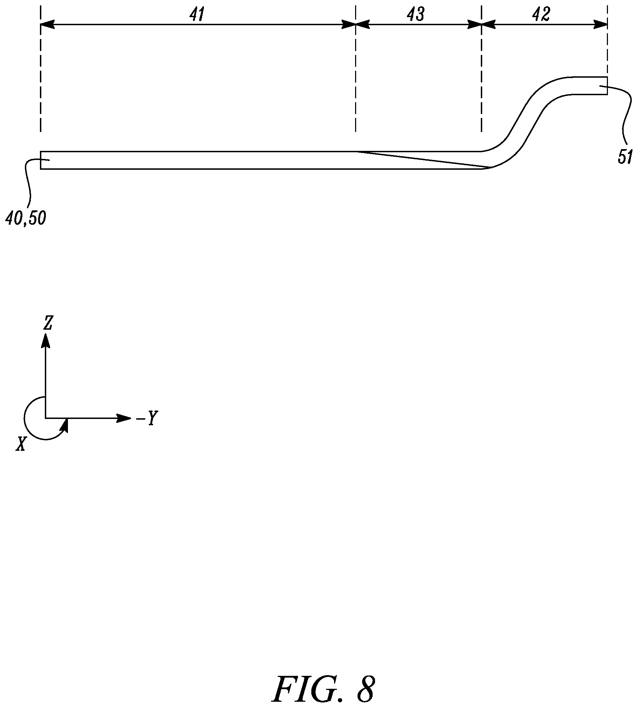

**FIG. 8** provides an example of a moulding tool 40 for moulding a composite article preform 35. The composite article preform 35 may be as illustrated in FIG. 3 - i.e. the composite article preform does not have a non-constant thickness, but instead has a thickness that varies between different regions of the preform. For example, one region of the preform may be 2 to 5 times thicker than another part of the preform. In a further example, it may be 2.5 to 4.5 times thicker. In a specific embodiment, the preform is 3 times thicker.

The moulding tool 40 comprises several portions. The different portions of the moulding tool 40 are configured to provide a compressive force against corresponding different regions of the composite article preform 35.

The different portions of the moulding tool 40 are configured to have different stiffnesses to each other. For example, a first portion 41 of the moulding tool 40 may be configured to have a stiffness akin to that of a hard tool, whereas a second portion 42 of the moulding tool may be configured to have a stiffness akin to that of a soft tool.

The first portion 41 comprises a first material 50. The second portion 42 comprises a second material 51.

The first portion 41 may not comprise the second material 50 while the second portion 42 may not comprise the first material 51.

The first material 50 is different to the second material 51. The first material 50 has a different stiffness to the second material 51; i.e., the Young's Modulus of the first material 50 is different to the Young's Modulus of the second material 51.

The moulding tool 40 of FIG. 8 may therefore be described as a multi-material variable stiffness tool.

In an embodiment, the first material 50 is stiffer than the second material 51.

The first material 50 may be a metal, a metal alloy e.g. INVAR (RTM) iron-nickel alloy, or a composite e.g. a carbon composite. The second material 51 may be an elastomer such as a silicone rubber.

The moulding tool 40 additionally comprises a transition portion 43, separating the first portion 41 and second portion 42, and having a variable stiffness such that its stiffness is substantially equal is the stiffness of the first portion at an interface with the first portion, and a lower stiffness that is substantially equal to the stiffness of the second portion at an interface with the second portion.

The transition portion 43 comprises both the first material 50 and the second material 51. The transition portion may comprise a layered structure in which one of the first material 50 and the second material 51 overlays the other of the first material 50 and the second material 51.

The layer of first material 50 of the transition portion 43 and/or layer of second material 51 of the transition portion 43 may not have a constant thickness but may reduce in thickness along the length of the transition portion. For example, at least one layer may be tapered, such that a thickness of the layer reduces along the tool. The thickness of the layer may reduce to substantially zero. Tapering reduces the likelihood of forming an imprint of the tool on a surface of the composite article preform to be moulded. Reducing the likelihood of forming an imprint of the tool on the surface of the composite article preform is desirable, as it reduces the likelihood (probability) of causing a stress concentration on the surface, which could act as a failure initiator in a finished composite article.

For example, a thickness of the first material 50 in the layered structure of the transition portion 43 may decrease with distance from the first portion 41 of the moulding tool 40 such that the layer of first material 50 has a minimum thickness at an interface between the transition portion 43 and the second portion 42. The minimum thickness of this layer may be substantially zero at this interface. In some examples, the change in thickness of the first material may be continuous, in that there are no discrete changes in thickness of the first material.

Alternatively or additionally, a thickness of the second material 51 in the layered structure of the transition portion 43 may decreases with distance from the second portion 42 of the moulding tool such that the layer of second material 51 has a minimum thickness at an interface between the transition portion 43 and the first portion 42. The minimum thickness of this layer may be substantially zero at this interface. In some examples, the change in thickness of the second material may be continuous, in that there are no step changes in thickness of the second material.

The layer of the first material 50 of the transition portion 43 may taper towards a line contact at an interface between the transition portion 53 and the second portion 42. Similarly, the layer of the second material 51 of the transition portion 43 may taper towards a line contact at an interface between the transition portion 43 and the first portion 41.

It will be appreciated that the tapering of the first and/or second material within the transition portion 43 may be desirable because this ensures a continuous change in stiffness of the tool along the span of the preform. This avoids the creation of a defined indentation in the surface of the preform at the interface between the first and second materials on the surface of the tool that faces the preform. The first material and /or second material may therefore have a shallow taper angle. In particular, the first material may have a shallow taper angle, such as 20 degrees or less. The shallow taper angle increases the flexibility of the first material, and hence the moulding tool, over a greater sub-portion of the transition portion.

In this way the transition portion 43 may have a variable stiffness such that its stiffness is substantially equal is the stiffness of the first portion at the interface with the first portion, and a different stiffness that is substantially equal to the stiffness of the second portion at the interface with the second portion.

The location and/or spatial extent of the transition portion 43 of the moulding tool 40 may be determined based upon a desired rate of change of thickness of the composite article preform.

From the above disclosure, it will be appreciated that higher rates of change of thickness of the composite article preform and/or higher degrees of curvature favour the use of a multi-material variable stiffness tool, as the propensity for internal undulations to form in the composite layers during vacuum debulking is increased with the use of a hard tool.

From the above disclosure, it will be appreciated that the location and/or spatial extent of the transition portion 43 represents a balance between maximising the spatial extent of the first portion 41, whilst mitigating the probability of the increased stiffness of the first material causing undulations in the layers of composite material of preform 35 during vacuum debulking.

This means that the location and/or a spatial extent of the transition portion of the moulding tool may be based upon a desired rate of change of thickness of the composite article preform, such that the local stiffness of the tool is reduced in regions of the tool which overlay higher desired rates of change in thickness of the composite article preform. The transition portion 43 may therefore be proximal to, but not necessarily overlaying regions of the preform in which there is higher desired rate of change in thickness of the composite article preform.

Taking the example of a fan blade 30 as a composite article manufactured from a composite article preform 35, this means that the first portion 41 and transition portion 43 of the moulding tool 40 may substantially overlay what will become the aerodynamic region 31 of the fan blade 30, whereas the second portion 42 of the moulding tool 40 may substantially overlay what will become the root region 32 of the fan blade 30.

Referring back to FIG 7, as the direction of desired compression during vacuum debulking ("-Z" direction in FIG 7) may not be perpendicular to the direction of applied force F, a lateral force (for example, in the X-Y plane of FIG 7) may be generated, acting on the moulding tool 40. Depending upon the topology of the outer surface 37 of the composite article preform 35, during vacuum debulking, this may cause the moulding tool to move laterally (e.g. in the X-Y plane) relative to the uncured composite article preform, in addition to the desired direction of compression. Lateral movement of the moulding tool in this way may be undesirable as it may be a cause of internal undulations as adjacent layers of uncured composite material may slide relative to each other.

The moulding tool 40 may therefore additionally comprise at least one guide. The at least one guide is configured to enable the moulding tool to move in a desired direction (for example, the -Z direction of FIG 7), whilst preventing the moulding tool moving in an undesired direction (for example, in the X-Y plane of FIG 7). Relative movement between the moulding tool and the composite article preform may therefore be controlled when the moulding tool is compressed against the composite article preform. The at least one guide may be any suitable guide. For example the at least one guide may be a through hole in the moulding tool, aligned in the direction of desired movement, relative to which a fixed guide pin passing through the guide may slide.

The first material 50 and second material 51 may be joined in the transition portion 43 by any suitable way. For example, the first material 50 and second material 51 may be joined by an adhesive.

Alternatively, the first material 50 and the second material 51 may be joined by at least one mechanical fastener. In these embodiments, the at least one mechanical fastener may comprise at least one corresponding insert that is embedded within the second material 51 and is configured to connect with a corresponding fixing connected to or connectable with the first material 50. In these embodiments, the insert embedded within the second material 51 may be flush with a surface of the second potion
Joining the first material 50 and second material 51 by mechanical fixings may be desirable as the first material 50 and second material 51 may wear at different rates. For example, the second material 51 may wear at a faster rate than the first material 50 as it is less stiff than the first material 50,
Joining via mechanical fixings therefore permits the second material 51 to be replaced, without replacing the first material 50, or vice versa, if the first material is damaged. This prolongs tool life and is environmentally advantageous. A similar effect may also be achieved by selection of a suitable adhesive for joining the first material and second material - i.e., selection of an adhesive that forms a strong enough bond between the first and second material such that the tool may function as required but the bond may be subsequently be broken to allow the tool to be refurbished by replacing one of the first material or second material.

Arrangements of more than one moulding tool 40 are also considered.

In these example arrangements, at least one of a first moulding tool 40' and second moulding tool 40" may comprise a first portion 41', 41", second portion 42', 42" and transition portion 43', 43".

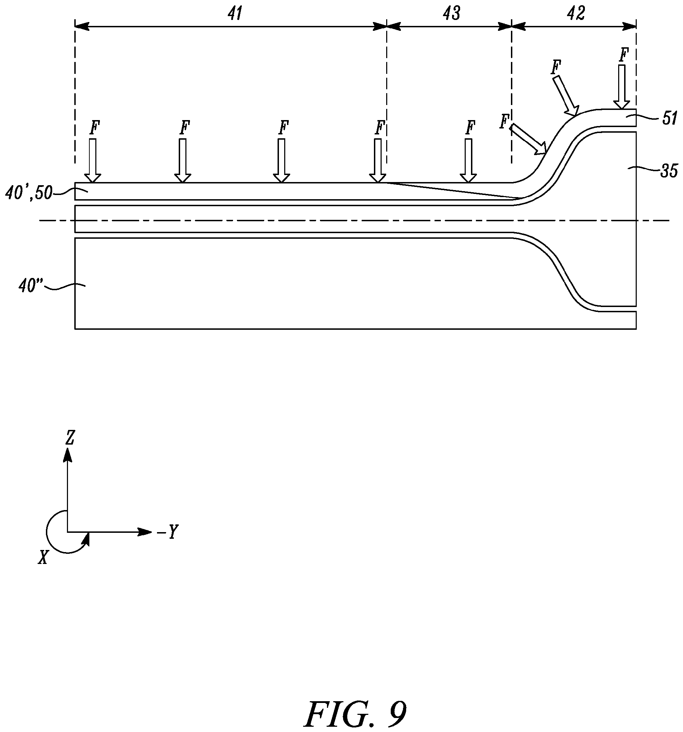

In the example of **FIG. 9****,** only the first moulding tool 40' comprises both the first material 50 and 51, whereas the bottom tool 40" is a conventional moulding tool, comprising only either the first material 50 or the second material 51.

It will be readily appreciated that in other examples the first moulding tool 40', as a top tool 40', may only comprise the first material 50, whereas the second moulding tool 40", as a bottom tool, 40" may be a variable stiffness tool as disclosed above, comprising both the first and second materials 50, 51.

Alternatively, in some arrangements, both the first moulding tool 40' and the second moulding tool 40" may comprise both the first and second materials 50, 51.

Determination of whether a moulding tool 40 may be a conventional moulding tool or may be a multi-material variable stiffness tool may be made based upon the desired rate change of thickness of the composite article preform and/or the desired degree of curvature of the outer profile of the uncured preform that faces the moulding tool.

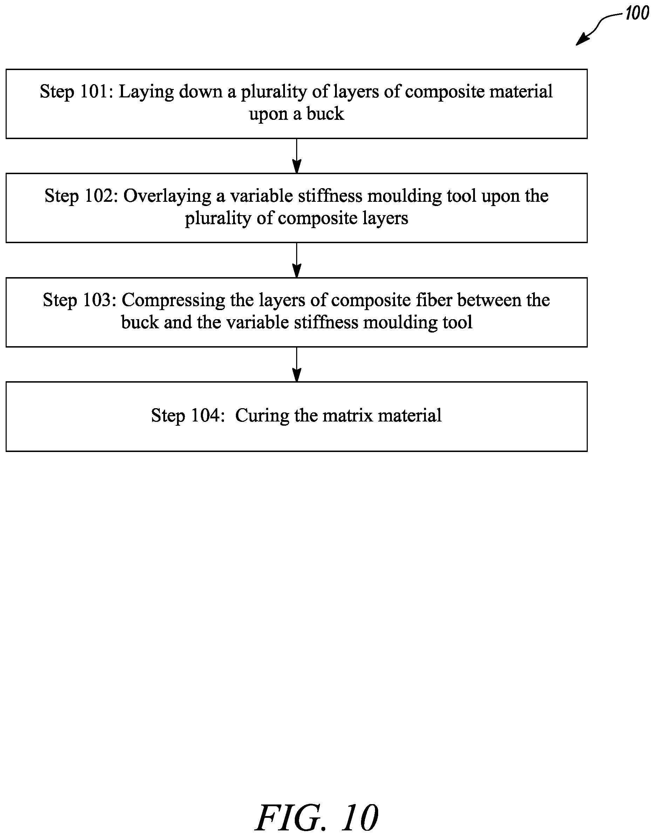

**FIG 10** illustrates a method 100 of forming a composite article preform using the above moulding tool. The method comprises the steps of: -
**Step 101:** laying down a plurality of layers of composite material (for example, carbon fiber encapsulated in a matrix material) encapsulated in a matrix material upon a buck. The buck has a profiled surface (surface topology) that corresponds to a desired surface of the composite article preform. The buck may have a monolithic structure, and /or may be manufactured from a material such as Invar (RTM) or a material that has the same or similar coefficient of thermal expansion to the composite fiber encapsulated in resin. The buck may have the same features as a moulding tool 40 as disclosed above.
**Step 102:** overlaying a moulding tool 40 upon the plurality of layers of composite fiber encapsulated in uncured matrix material. By so doing, the plurality of layers of composite fiber and uncured matrix material are sandwiched between the buck and moulding tool.
**Step 103:** compressing the layers of composite fiber between the buck and the moulding tool. Compression may be performed by placing the buck, moulding tool and the plurality of layers of composite fiber encapsulated in resin in a non-porous bag, sealing the bag and extracting air from the bad (vacuum debulking).
**Step 104:** Curing the matrix material, by for example, heating it.

It will be appreciated that although steps 101 - 104 are shown sequentially, some steps may be performed simultaneously. For example, steps 103 and 104 may be performed simultaneously.

The above method may be performed as part of a wider manufacturing process. For example, once the step 104 has concluded, at least one machining operation may be performed on the composite article preform and/or at least one protective coating may be applied to the composite article preform to form a composite article, such as a gas turbine engine composite fan blade.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A moulding tool (40) for moulding a composite article preform (35), the composite article preform having a thickness that varies between different regions of the composite article preform, the moulding tool comprising:
a first portion (41) for moulding a corresponding first region of the composite article preform, the first portion of the moulding tool comprising a first material (50);
a second portion (42) for moulding a corresponding second region of the composite article preform, the second portion of the moulding tool comprising a second material (51); and
a transition portion (43), between the first portion (41) and the second portion (42), the transition portion (43) comprising the first material (50) and the second material (51);
wherein the first material (50) and the second material (51) are different, and the first portion (41) and the second portion (42) have different stiffnesses.

2. The moulding tool (40) of claim 1, wherein at least one of a location and/or a spatial extent of the transition portion (43) of the moulding tool is based upon a desired rate of change of thickness of the composite article preform (35).

3. The moulding tool (40) of claim 1 or 2, wherein the first material has a greater stiffness than the second material.

4. The moulding tool (40) of any preceding claim, wherein the first material (50) comprises at least one of: a metal, a metal alloy, or a composite.

5. The moulding tool of claim 4, wherein the metal alloy (50) is an iron-nickel alloy.

6. The moulding tool (40) of any preceding claim, wherein the second material (51) comprises an elastomer.

7. The moulding tool (40) of claim 6, wherein the elastomer is a silicone rubber.

8. The moulding tool (40) of any preceding claim, wherein the first region of the composite article preform (35) is thinner than the second region of the composite article preform.

9. The moulding tool (40) of any preceding claim, wherein the transition portion (43) comprises a layered structure in which the first material (50) is proximal to an outer surface of the composite article preform (35) and the second material (51) overlays the first material (50).

10. The moulding tool (40) of claim 9, where a thickness of the first material (50) in the layered structure of the transition portion (43) decreases with distance from the first portion (41) of the moulding tool (40).

11. The moulding tool of claim 10, wherein the thickness of the first material (50) in the layered structure of the transition portion (43) continuously tapers to a substantially zero thickness.

12. The moulding tool of claim 11, wherein a taper angle of the taper is less than 20 degrees.

13. The moulding tool of any preceding claim, wherein the first portion (41) and the second portion (42) are connected by an adhesive or at least one mechanical fixing.

14. The moulding tool of any preceding claim, wherein the moulding tool comprises at least one guide, the at least one guide configured to enable movement of the moulding tool in a desired direction and to prevent movement of the moulding tool in an undesired direction.

15. A method of forming a preform of a gas turbine engine composite fan blade, the method comprising:
laying down a plurality of layers of composite material upon a buck;
overlaying a moulding tool of any preceding claim upon the plurality of composite layers;
compressing the layers of composite fiber between the buck and the moulding tool; and
curing the matrix material.
